(19) **Europäisches Patentamt / European Patent Office / Office européen des brevets**

(11) **EP 1 930 088 A1**

(12) # EUROPEAN PATENT APPLICATION
published in accordance with Art. 153(4) EPC

(43) Date of publication:
**11.06.2008 Bulletin 2008/24**

(21) Application number: **06715693.5**

(22) Date of filing: **10.03.2006**

(51) Int Cl.:
**B05D 5/00** (2006.01)    **B05D 1/36** (2006.01)
**B32B 7/04** (2006.01)    **B32B 27/00** (2006.01)

(86) International application number:
**PCT/JP2006/305299**

(87) International publication number:
**WO 2007/026442 (08.03.2007 Gazette 2007/10)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.08.2005 JP 2005250971**

(71) Applicant: **Nippon Steel Corporation Tokyo 100-8071 (JP)**

(72) Inventors:
• **KANAI, Hiroshi**
  **Kimitsu-shi**
  **Chiba 299-1141 (JP)**
• **FURUKAWA, Hiroyasu**
  **Kimitsu-shi, Chiba 299-1141 (JP)**
• **NAGASE, Magonori**
  **Kimitsu-shi, Chiba 299-1141 (JP)**

(74) Representative: **Vossius & Partner
Siebertstrasse 4
81675 München (DE)**

(54) **PAINTED PLATE EXCELLENT IN WORKABILITY AND SCRATCH RESISTANCE, AND METHOD FOR PRODUCING THE SAME**

(57)    The invention relates to precoated sheets, including precoated metal sheets, each having an appearance of orange peel, and good workability and scratch resistance. The precoated sheet of the invention has a filtered center line waviness curve (Wca) of the outermost surface of coated film of $0.35\ \mu m \leq Wca \leq 1.25\ \mu m$, and a mean spacing of local peaks of filtered center line waviness curve (Wc-sm) of $2800\ \mu m \leq Wc\text{-}sm \leq 12500\ \mu m$, and has a wavy structure at the interface between the outermost coated film layer and the lower coated film layer. Preferably, the precoated sheet is designed to satisfy the conditions that a wavy curve W revealed when observing the interface between the outermost coated film layer and the lower coated film layer in the section of the film thickness direction (1) comprises a big wave defined as a wave having a region in which $A \leq 0.8B$, wherein A is a distance between the outermost surface S of the coated film and the wavy curve W at the interface, and B is an average film thickness of the outermost coated film layer, and (2) has an average distance between the big waves of not greater than $750\ \mu m$.

## Fig.4

**Description**

TECHNICAL FIELD

The present invention relates to precoated sheets excellent in workability and scratch resistance. The precoated sheet of the present invention has a coated film with an appearance of an orange peel surface exhibiting waviness of a relief shape and has the excellent characteristics of resistance to sticking of dirt even if dirt deposits on it and muting of any scratches on the surface. Further, the present invention relates to a method of production of a precoated sheet enabling the easy formation of an orange peel-like relief appearance by the multilayer simultaneous coating method.

The "precoated sheet" referred to here is defined as a sheet material comprised of a substrate on at least one surface of which a coated film is formed. As the substrate, it is possible to use, in addition to a metal, paper, wood, plywood, etc., a resin sheet of polypropylene (PP), polyethylene terephthalate (PET), etc.

BACKGROUND ART

One typical example of a precoated sheet, precoated metal sheet, is being used in a broad range of applications from buildings, ships, bridges, and other large structures to various machinery, automobiles, furniture, electrical appliances, and other smaller objects and daily necessities.

In general, these metal sheets are coated by so-called "post-coating" after being worked and assembled. With post-coating, since the coated object is three-dimensional in shape, spray coating of solvent-based coatings, electrostatic coating of powder coatings, and other noncontact type coating methods have been used. In the fields of housings of home electrical appliances and office automation equipment, roofs and walls, indoor walls, and other building materials, sundry goods, auto parts and their housings, etc., orange peel-like coated film appearances helping to mask surface defects are being sought. With spray coating, electrostatic coating of powder coatings, and other non-contact coating methods, the insufficient leveling of the coatings have facilitated the formation of a distinctive orange peel appearance at the coated surface and have enabled the easy formation of an orange peel surface.

Recently, in the fields of building materials, home electric appliances, sundry goods, automobiles, etc., the conventional post-coating method of shaping and assembling the metal sheets, then coating them has often been replaced by the precoating method of shaping metal sheet coated in advance (precoated metal sheet, abbreviated as "PCM"), then joining it to form products. Introduction of the precoating method has the merits of enabling elimination of the coating process at the demand side, solving the problems of pollution and environmental contamination due to disposal of waste products of coatings, and enabling the work space previously used for coating to be converted to other applications.

However, in particular in the field of precoated steel sheet, workability is strongly required as one of the product characteristics, so introduction of orange peel surface coated film with a solid, thick appearance has not been easy. The conventional methods of formation of coated film with an orange peel appearance include (1) the method of using a coating containing resin beads, (2) the method of using a coating containing inorganic beads, (3) the method of utilizing printing, (4) the method of using mesh rolls, (5) the method of using electrostatic powder coating, etc.

For example, JP 4-370164 A describes a method of using a coating composition containing thermoplastic resin powder of an average particle size of 10 to 50 $\mu$m to obtain an orange peel surface appearance coated film (resin bead method). The method of JP 4-370164 A defines the difference in solubility parameter with the vehicle resin and defines the solution viscosity of the resin powder at the coated film baking temperature. Further, it describes that in a coated film obtained by coating and baking a coating composition on a coated object, in cross-section, the resin powder melts and flattens to a certain extent and the vehicle resin cures above it to form a film and that in such an obtained orange peel surface coated film, the height of the projecting parts measured from the lowest coated film surface is 2 to 50 $\mu$m or so and the width of one projecting part (size indicating spread of projecting part) becomes 1 to 10 mm or so.

JP 11-104557 A also describes a resin bead method. This method coats and bakes a coating composition containing a thermosetting resin, an amino resin with a lower surface free energy than the thermosetting resin, and resin beads which melt at the time of baking of the coated film and which do not dissolve in the coating.

JP 5-32918 A describes an inorganic bead method. This method uses a coating composition containing glass beads of sizes of less than 0.3 mm and a colored aggregate of 150 to 200 mesh in a specific ratio.

JP 6-206047 A describes a printing method partially forming three-dimensional patterns of a coated film thickness of at least 2 $\mu$m or more by printing, then forming a topcoat layer over the entire surface.

JP 2002-361164 A discloses a mesh roll method of coating a coating comprised of a coating resin (base resin) to which an additive having a distinct solubility parameter is added using mesh rolls so that the additive with poor compatibility with the base resin separates in the film-forming process to form a cissing-like fancy appearance.

The conventional method of using a coated film containing resin beads has the problems that the reproducibility of the patterns in the heating process is not necessarily good, it is difficult to finely adjust the thickness by the heating pattern, the coating stability is poor, and cleaning becomes necessary when changing the coatings (poor coating due to the beads occurring).

The method of using an inorganic bead-containing coating to form the orange peel surface has the problems of a larger amount of beads exposed at the surface of the coated film, deterioration of the coated film due to detachment of the beads, and poor workability of the coated film. Further, there is also the problem that it is difficult to stably suspend solid beads in a coating. Further, there is the difficulty that the surface of the coated film is left with a rough feeling.

In the printing method, basically the three-dimensional patterns are printed, then dried by heating, then the topcoat layer is formed and dried by heating again in a "two-coat two-bake method". For this reason, the coating process becomes troublesome and the cost rises.

In the case of the mesh roll method, it is difficult to adjust the thickness to a uniform one and therefore some thin parts are caused, so the precoated metal sheet has problems in corrosion resistance.

In the electrostatic powder coating method, the line speed is a small 10 to 20 m/min, so the productivity is low and the cost ends up becoming high.

DISCLOSURE OF THE INVENTION

An object of the present invention is to provide a precoated metal sheet and other precoated sheet having an orange peel like coated appearance and excellent in workability and scratch resistance and a simple method of production of such a precoated sheet.

The inventors took note of the phenomenon that a multicoated film layer obtained by stacking layers formed from coatings of different properties is disturbed in the interface layers of the multicoated film at the time of drying by heating resulting in an uneven flow of the coating. Further, the inventors discovered that while this uneven flow is a fine convection phenomenon in the coated film, it induces large changes in the relief shapes on the level of several millimeter on the outermost surface of the coated film. The inventors engaged in intensive research and succeeded in forming orange peel-like smooth relief shapes on the surface of a coated film by optimizing the surface tensions of the coatings forming the different layers and the heating conditions of the coated film and thereby completed the present invention.

The precoated sheet according to the present invention has a coated film with an outermost coated film layer of an orange peel appearance and with an interface between the outermost coated film layer and its lower coated film layer of a substantially or completely continuous wave structure, that is, the interface formed a substantially or completely continuous wave structure surface, neither the lower coated film layer nor the outermost coated film layer has any discontinuous parts, and the entire surface of the substrate is substantially covered by these, so the precoated sheet is also excellent in workability and scratch resistance.

The present invention has as its gist the following:

(1) A precoated sheet excellent in workability and scratch resistance characterized by having a coated film with an outermost surface having a filtered centerline waviness curve (Wca) of 0.35 $\mu$m $\leq$Wca$\leq$1.25 $\mu$m and a mean spacing of local peaks of the filtered centerline waviness curve (Wc-sm) of 2800 $\mu$m $\leq$Wc-sm$\leq$12500 $\mu$m and by having an interface between an outermost coated film layer and its lower coated film layer of a wave structure.

(2) A precoated sheet excellent in workability and scratch resistance as set forth in the above (1), characterized in that a waviness curve appearing when observing the interface between the outermost coated film layer and its lower coated film layer in cross-section in a thickness direction of the coated film satisfies the conditions of:

(i) including large waves defined by having areas of A$\leq$0.8B where the distance between the coated film outermost surface and the interface waviness curve is "A" and the mean thickness of the outermost coated film layer is "B" and

(ii) having an average distance between large waves of 750 $\mu$m or less.

(3) A precoated sheet excellent in workability and scratch resistance as set forth in the above (1) or (2), characterized in that the interface between the outermost coated film layer and its lower coated film layer is a continuous wave structure surface.

(4) A precoated sheet excellent in workability and scratch resistance as set forth in any one of the above (1) to (3), characterized in that the outermost coated film layer and its lower coated film layer are of thermosetting resins of the same color.

(5) A precoated sheet excellent in workability and scratch resistance as set forth in any one of the above (1) to (4), characterized in that the total thickness of the outermost coated film layer and its lower coated film layer is, in terms of dried coated film thickness, 5 to 50 $\mu$m.

(6) A precoated sheet excellent in workability and scratch resistance as set forth in any one of the above (1) to (5), characterized in that the lower coated film layer and substrate have one or more coated films between them.

(7) A method of production of a precoated sheet excellent in workability and scratch resistance as set forth in the above (1) characterized by coating a substrate with a coating forming a lower coated film layer and a coating forming an outermost coated film layer in a wet state to form a coated film and simultaneously drying these coated film layers by heating.

(8) A method of production of a precoated sheet excellent in workability and scratch resistance as set forth in the above (7) characterized by coating the coating forming the lower coated film layer and the coating forming the outermost coated film layer by wet-on-wet coating or simultaneous multilayer coating.

(9) A method of production of a precoated sheet excellent in workability and scratch resistance as set forth in the above (7) or (8) characterized by drying the coated film layers by heating by induction heating, electric current heating, or ultrasonic heating.

(10) A method of production of a precoated sheet excellent in workability and scratch resistance as set forth in any one of the above (7) to (9), characterized in that the coating forming the outermost coated film layer, when measured for surface tension five times, has a difference between a maximum value and a minimum value of the obtained measurement values of 2 mN/m or more.

(11) A method of production of a precoated sheet excellent in workability and scratch resistance as set forth in any one of the above (7) to (10), characterized in that the coating forming the outermost coated film layer includes two or more types of surfactants whose surface tensions differ.

(12) A method of production of a precoated sheet excellent in workability and scratch resistance as set forth in any one of the above (7) to (10), characterized in that an absolute value of a difference between a surface tension $\delta a$ of the coating of the outermost coated film layer and a surface tension $\delta b$ of the coating of the lower coated film layer is 0.1 mN/m$\leq$|$\delta a$-$\delta b$|$\leq$5.0 mN/m in range.

(13) A method of production of a precoated sheet excellent in workability and scratch resistance as set forth in the above (11), characterized by adjusting at least one of the surface tension of the coating of the outermost coated film layer and the surface tension of the coating of the lower coated film layer by adding an additive.

(14) A method of production of a precoated sheet excellent in workability and scratch resistance as set forth in the above (13), characterized in that the additive is a surfactant, blending solvent, or leveler.

(15) A method of production of a precoated sheet excellent in workability and scratch resistance as set forth in the above (11) or (13), characterized in that the coating contains a surfactant in an amount of 0.4 mass% or less.

(16) A method of production of a precoated sheet excellent in workability and scratch resistance as set forth in any one of the above (7) to (15), characterized by using an induction heating system to heat the substrate by a heating rate of 1.0°C/sec to 20°C/sec in range so as to simultaneously dry the coated film layers by heating.

(17) A method of production of a precoated sheet excellent in workability and scratch resistance as set forth in any one of the above (7) to (16), characterized in that the viscosities of the coating forming the outermost coated film layer and the coating forming its lower coated film layer are 0.2 to 1.0 Pa·s.

The precoated sheet of the present invention exhibits excellent characteristics of scratch resistance and workability and also exhibits an orange peel-like solid aesthetic appearance. Further, since the coated film does not contain any beads or other dispersed matter, it exhibits extremely good workability. In particular, application of it to precoated steel sheet etc. is easy.

According to the method of production of the present invention, the coating line is improved in productivity (the line speed is faster, the coated films can be formed by two-coating and one-baking step, and no baking step of the lower coated film layer is required), and the range of selection of coatings is broad. For this reason, production costs can be slashed. Further, according to the present invention, even when changing the coatings or when changing the order lots, since coatings not containing any beads or other solid matter are used, the coaters can be easily cleaned, the idling time due to the work of changing the coatings is shorter, and there is also less work trouble.

BRIEF DESCRIPTION OF THE DRAWINGS

FIG. 1 is a view for schematically illustrating the precoated sheet of the present invention.

FIG. 2 is a schematic enlarged view of a cross-section of an actual coated film of the precoated sheet of the present invention.

FIG. 3 is a view for schematically illustrating a conventional precoated sheet using resin beads to form an orange peel surface.

FIG. 4 is a view for illustrating the characteristics of the wavy interface of the outermost coated film layer and its lower coated film layer of the precoated sheet of the present invention.

BEST MODE FOR CARRYING OUT THE INVENTION

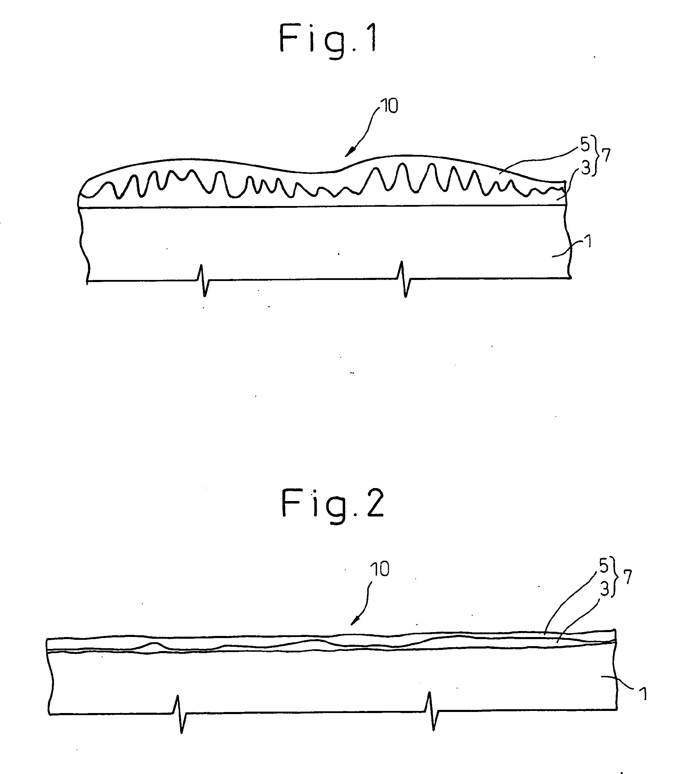

As shown in the schematic view of FIG. 1, the precoated sheet of the present invention 10 has a substrate 1 and a multicoated film layer 7 comprised of a continuous lower coated film layer 3 formed on the substrate 1 and a continuous outermost coated film layer 5 formed over it. In FIG. 1, to facilitate viewing of the structure of the coated film, the view is greatly enlarged in the thickness direction of the coated film layers 3, 5 (direction perpendicular to plane of substrate 1) with respect to the planar direction of the substrate 1. Observing the enlarged cross-section of the actual coated film of the precoated sheet of the present invention, the result becomes as shown schematically in FIG. 2. In this figure, the outermost coated film layer 5 appears almost smooth, but in fact has an orange peel surface.

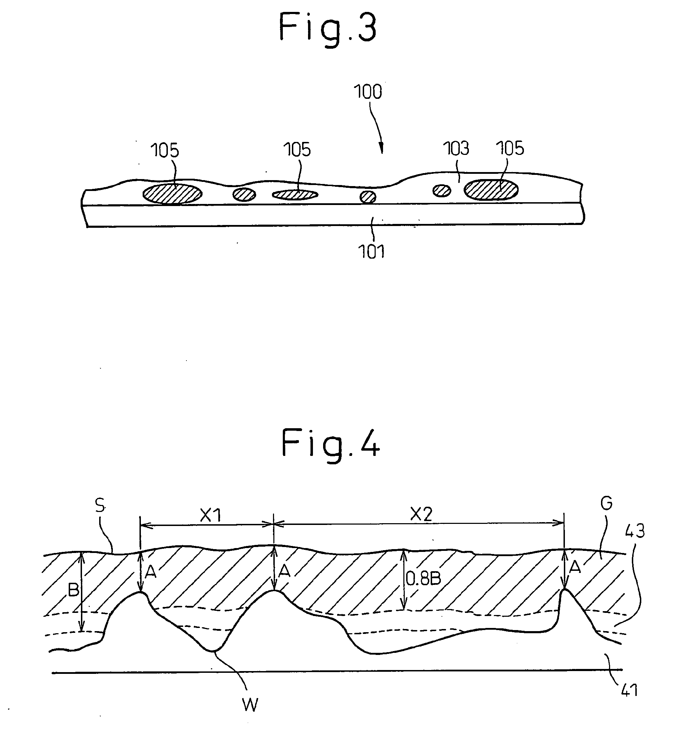

FIG. 3 is a schematic view of a conventional orange peel surface precoated sheet produced using a coating containing resin beads. In the illustrated precoated sheet 100, the coated film 103 formed on the substrate 101 has resin beads 105 dispersed in it. In this way, in a conventional orange peel surface precoated sheet using resin beads, even if the resin beads melt and deform to a certain degree, they are present dispersed in state. Further, even if adjoining beads combine and form larger particles, these will still be dispersed. Therefore, these will not form a continuous coated film.

As opposed to this, as shown in FIGS. 1 and 2, in the orange peel surface precoated sheet of the present invention, the interface between the lower coated film layer and outermost coated film layer is disturbed by the turbulence caused at the time of drying the coated film by heating, but substantially or substantively the continuity is maintained.

In the case of the prior art using resin beads, the thermosetting binder has thermoplastic resin beads mixed into it, so the affinity between the two resins is low (since rather the two not dissolving in each other is sought) and the coated film is easily given defects when working the precoated sheet.

As opposed to this, for the coated film of the precoated sheet of the present invention, a thermosetting resin may be used for both of the upper/lower layers. If adjusting the surface tensions of the two to be different, they may even be exactly the same resin. Therefore, it is possible for the upper/lower coated film layers to have mutual adhesion close to that of a single layer. Further, since these are simultaneously dried, in the present invention, it is believed that the cross-linkability between the upper/lower resins also becomes higher.

The substrate used in the present invention is not particularly limited. It is possible to use a sheet made of a metal, paper, wood, plywood, etc. or also a polypropylene (PP), polyethylene terephthalate (PET), or other resin etc.

As a metal sheet, for example, a steel sheet, aluminum sheet, stainless steel sheet, titanium sheet, copper sheet, etc. may be mentioned. Among these, as example of steel sheets, cold rolled steel sheet, hot rolled steel sheet, galvanized steel sheet, alloyed galvannealed steel sheet, zinc-iron alloy plated steel sheet, zinc-aluminum alloy plated steel sheet, aluminum plated steel sheet, chrome plated steel sheet, nickel plated steel sheet, zinc-nickel alloy plated steel sheet, tin plated steel sheet, etc. may be mentioned.

The metal sheet may, as necessary, be pretreated. Such pretreatment includes cold water washing, hot water washing, pickling, alkali degreasing, grinding, polishing, chromate treatment, zinc phosphate treatment, composite oxide film treatment, or other nonchromate type treatment, etc. These may be used alone or combined for treatment prior to coating. The conditions for the treatment prior to coating may be suitably selected.

The coated film layers used in the present invention (lower coated film layer and outermost coated film layer (upper coated film layer)) are required to exhibit workability, hardness, stain resistance, chemical resistance, and numerous other performance, so as the types of the main resins used for the coatings used to form the coated film layers, a polyester resin, acryl resin, urethane resin, vinyl chloride resin, fluororesin, etc. are suitable. The combination of the resins of the upper/lower layers may be suitably selected in accordance with the objective. In particular, a polyester resin is most suitable since it is superior in workability and well balanced with hardness, stain resistance, and other performance.

As the cross-linking agents used in the coatings, a melamine resin, an amino resin such as a benzoguanamine resin, or an isocyanate resin is superior in balance of workability and other performance.

The solvents used in the coatings are not particularly limited. Any solvents may be used. The types of the solvents are preferably selected in a range not obstructing the dissolution of the resins. Further, their types and amounts may be selected considering the viscosities and coating work efficiency at the time of coating.

The upper/lower layer coatings may have any colors. In some cases, coloring agents may be used to color them. Further, the upper/lower layer coatings may be the same in color or different in color. When making the upper/lower layers the same color, coatings are used so that the color difference of the coated films when forming a single layer by the thicknesses of the upper/lower layers becomes a color difference of 1.0 or less as defined by the JIS Z 8730-6.1.

If making the total thickness after drying of the upper/lower coated film-layers 5 μm or more, formation of an orange peel surface is easy. More preferably, the total thickness after drying is made 8 μm or more. The upper limit of the total thickness after drying is not particularly limited, but if the thickness becomes too great, the drying takes time, so from the viewpoints of economy and productivity, 50 μm or less is preferable.

In accordance with need, it is possible to coat another coating to the metal sheet and cure and dry it to form an additional coated film, then form the lower coated film layer and outermost coated film layer of the present invention. The type of the coating for the additional coated film is not particularly limited, but a polyester resin-based one, epoxy resin-based one, urethane resin-based one, acryl resin-based one, etc. may be mentioned. The selected coating is coated by a roll coater, curtain flow coater, roller curtain coater, electrostatic coater, brush, blade coater, die coater, etc. to give the necessary thickness, then is cured and dried by allowing it to stand at ordinary temperature or by a hot air oven, induction heating oven, near infrared ray oven, far infrared ray oven, energy beam curing oven, etc. so as to obtain the additional coated film layer.

The additional coated film may, as needed, have a known pigment or additive added to it. It may have any thickness, but in a precoated metal sheet, 1 to 30 $\mu$m or so, in particular 3 to 12 $\mu$m in terms of dry thickness is general. The drying conditions may be suitably selected in accordance with the type of the coating and the performance desired to be obtained, but a hot air oven or induction heating oven, near infrared ray oven, etc. with a maximum peak metal temperature of 150 to 240°C and a peaking time of 10 to 200 seconds or so are general. The additional coated film layer may be omitted, may be a single layer, or may be a multilayer.

The precoated sheet of the present invention must have a coated film with an outermost surface having a filtered centerline waviness curve (Wca) of 0.35 $\mu$m $\leq$Wca$\leq$1.25 $\mu$m and a mean spacing of local peaks of the filtered centerline waviness curve (Wc-sm) of 2800 $\mu$m $\leq$Wc-sm $\leq$12500 $\mu$m. If Wca is smaller than 0.35 $\mu$m, the coated film becomes strongly smooth in feeling and, regardless of the Wc-sm, the orange peel feeling will be lost. On the other hand, if Wca is larger than 1.25 $\mu$m, the film becomes strongly rough and the smooth impression is lost. If Wc-sm is smaller than 2800 $\mu$m, the orange peel feeling becomes too strong, while if becoming larger than 12500 $\mu$m, the orange peel feeling is lost.

The "filtered centerline waviness curve (Wca)" is the value defined by the following equation when eliminating the short wavelength surface roughness components from the cross-sectional curve, sampling from the obtained curve a part of the measurement length L in the centerline direction, and designating the centerline of the sampled part as the X-axis and the vertical magnification rate direction as the Z-axis and defining z=f(x),

$$Wca = \frac{1}{L} \int_0^L |f(x)| dx \qquad (\mu m)$$

The short wavelength surface roughness components are those of less than 80 $\mu$m (cutoff value 80 $\mu$m).

The "mean spacing of local peaks of the filtered centerline waviness curve (Wc-sm)" is the value defined by the following equation when eliminating from the cross-sectional curve the short wavelength surface roughness components using an 80 $\mu$m cutoff value, sampling from the obtained curve (filtered centerline waviness curve) a certain measurement length L, designating the space from a crossing point cutting across the mean line from a peak to a valley (intersection with mean line) to a crossing point from the next peak to valley as $Sm_i$ and setting the total number of spacings as N:

$$Wc - sm = \frac{1}{N} \sum_{i=1}^{N} Sm_i \qquad (\mu m)$$

The filtered centerline waviness curve (Wca) and the mean spacing of local peaks of the filtered centerline waviness curve (Wc-sm) were measured by measuring samples of any five locations and finding their averages.

In the precoated sheet of the present invention, the shape of the interface between the outermost coated film layer and its lower coated film layer is important. To form the targeted orange peel surface, the shape of the interface has to be suitably controlled and the interface has to be given a wave structure.

Specifically, as shown in FIG. 4, when the waviness curve W appearing when observing the wavy interface between the outermost coated film layer 43 and its lower coated film layer 41 by the cross-section in the thickness direction of the coated film satisfies the conditions:

(1) including large waves defined by having areas G of A$\leq$0.8B (in the figure, area shown by hatching) where the distance between the coated film outermost surface S and the interface waviness curve W is "A" and the mean thickness of the outermost coated film layer 43 is "B" and
(2) having an average distance between large waves (corresponding to distance between points of maximum heights of adjoining large waves, shown in the figure by $X_1$ and $X_2$) of 750 $\mu$m or less,

a good orange peel surface is formed. If no large waves are observed in the cross-section of the coated film, formation of a good orange peel surface is doubtful. If the average distance between large waves exceeds 750 μm, the convection phenomenon of the coating inside the coated film at the time of heating and drying quiets down and the orange peel surface becomes unclear.

Whether or not the waviness curve of the cross-section of the interface satisfies the above conditions can be judged as follows:

(a) First, five 3 mm long samples are taken from any five locations on the precoated sheet.
(b) The cross-sections of the individual samples are examined and the following procedure is used to calculate the average distance between large waves.

(1) The average thickness B of the outermost coated film layer is measured and 0.8B is calculated. As the average thickness, the value calculated from the weight of the coated film per unit area of 1 $m^2$ and the density of the coated film is employed.
(2) The distance A between the outermost surface of the coated film and the waviness curve of the interface and the 0.8B are compared to determine the large wave areas.
(3) Among the large wave areas, one point closest to the outermost layer of the coated film is selected. The distances $X_1$, $X_2$, ... between adjoining large waves starting from that point are measured.
(4) The average value of the distance between the large waves is found for each sample.
(5) The average of the distance between large waves for all of the samples is used as the average distance between large waves of the precoated sheet.

The mechanism behind the formation of the orange peel surface in the present invention is not clear, but the following mechanism may be in action:

During the drying process, due to some reason or another, parts of high and low surface tension are formed in the outermost layer of the coated film. At the high surface tension parts, the coated film is pulled in resulting in the formation of relief shapes. When relief shapes are formed, a difference arises in the rate of volatilization of the solvent depending on the location on the surface. Due to this, a temperature difference is also caused. Therefore, convection occurs at the coated film. Due to this convection, a difference in the concentration of the solvent occurs depending on the location in the coated film. Due to this, a difference in the surface tension occurs. Due to this difference in surface tension, further relief shapes are caused. Due to the combination of these phenomena, an orange peel surface is formed.

In the method of production of an orange peel surface precoated sheet of the present invention, it is essential to form at least upper and lower, that is, two, coating film layers in the wet state and simultaneously dry them by heating. The method for coating the coating for forming the coated film layers may be a wet-on-wet method using a curtain coater or a roll coater or a multilayer simultaneous coating method using a slide curtain coater. The latter is more preferable.

In the method of the present invention, it is possible to mix into the coating forming the outermost coated film layer two or more types of surfactants with different surface tensions. This enables a better orange peel surface to be obtained. The reason is unclear, but it is believed that surfactants whose surface tensions differ cause a difference in the rate of volatilization of the solvent on the surface of the coated film and thereby induce the above-mentioned fine convection phenomenon.

As the surfactant, an acryl resin-based one, silicone-based one, fluorine-based one, hydrocarbon based one, etc. is suitable. So long as there is surface activity, another may also be used. The surfactant includes defoam agents, leveling agents, dispersion agents, lubricants, foam agents, and other various types in accordance with various objectives. Any of these may be used. The concentration of the surfactant in the coating is preferably 0.4 mass% or less. If over 0.4 mass%, the work efficiency at the time of coating becomes poor. For example, when applying the coating by curtain coating, the stability of the curtain is easily disturbed, while when roll coating, apart from the orange peel surface, ribbing (stripe shaped patterns running substantially parallel to the coating direction, see Journal of the Japan Society of Colour Materials, vol. 73, no. 9, p. 461) and other defects easily become noticeable.

It is also possible to change the type of the solvent used in the coating to adjust the surface tension. For example, N-methyl pyrrolidone exhibits a high surface tension of about 42 mN/m, while ethoxyethyl propionate exhibits a surface tension of about 27 mN/m, and xylene one of about 32 mN/m.

It is also possible to use as the coating forming the outermost coated film layer a coating with a surface tension, when measured five times, with a difference in maximum value and minimum value of 2 mN/m or more so as to obtain a good orange peel surface. The reason for this is not clear, but for example is believed to be as follows:

When the surface tension is measured a plurality of times, the phenomenon of its value greatly fluctuating indicates that microscope unevenness is occurring in the surface tension in the coating. If microscopic unevenness occurs in the surface tension in the coating forming the outermost coated film layer, it is believed that this triggers a fine convection phenomenon as explained above in the outermost coated film layer in the drying process and leads to a good orange peel surface being formed.

For a good orange peel surface to be formed, it is preferable that the surface tension be continuously measured five times and that the difference between the maximum value and minimum value of the same be 2 mN/m or more. If less than 2 mN/m, a good orange peel surface cannot be obtained in some cases. The upper limit of the difference of the maximum value and minimum value of the surface tension is not particularly limited, but if over 10 mN/m, there is a good chance that the coating will not be sufficiently stirred, so 10 mN/m or less is preferable. For the coating surface tension, the value of the static surface tension obtained at 20°C by a platinum ring pullup method may be used.

In the present invention, it is also possible to control the outermost coated film layer and the lower coated film layer in coating surface tension so as to form the orange peel surface. For the orange peel surface to be formed, it is important that the absolute value of the difference of the surface tension $\delta a$ of the coating of the outermost coated film layer and the surface tension $\delta b$ of the coating of the lower coated film layer be 0.1 mN/m$\leq$|$\delta a$-$\delta b$|$\leq$5.0 mN/m in range. If the surface tension difference is less than 0.1 mN/m, even if a convection phenomenon occurs in the coated film, unevenness of the surface tension of the surface of the coated film will be hard to cause and an orange peel surface will be difficult to form. On the other hand, if over 5.0 mN/m, the large difference in surface tension of the upper/lower layers will cause the interface of the outermost coated film layer and the lower coated film layer to conversely stabilize, convection through the upper/lower layer will be suppressed, and an orange peel surface will be hard to form.

In the present invention, during curing of the coating resin by the heating and drying of the coated film, parts of the upper layer (outermost coated film layer) coating and its lower layer coating are suitably redeployed resulting in convection and the formation of a boundary interface between the upper/lower layers of a wave structure, and enabling a good orange peel appearance to be obtained. To use this mechanism to form an orange peel surface, the difference between the upper/lower layer surface tensions must be maintained in the above range.

As the method for adjusting the surface tension of the coating to the above range, a method of changing the types of the additives for the coating (for example, the leveler, surfactant, etc.) or their amounts of addition, a method of changing the type and amount of the solvent, etc. are possible. For example, when adding a surfactant in the coating to adjust the surface tension, the concentration of the surfactant in the coating is preferably, as explained above, 0.4 mass% or less.

The upper/lower layer coatings become less of obstacles to flow the lower they are in viscosity, so an orange peel surface becomes easier to form. The viscosity of the coating is adjusted to 0.2 to 1.0 Pa·s in range, preferably 0.5 to 1.0 Pa·s in range. The viscosity of the coating can be adjusted by changing the amount of the solvent or the type of the solvent in the coating. Further, a thickener or other additive may be used to adjust the viscosity. A known method may be used.

In addition to adjustment of the coating conditions explained above, another important factor in formation of an orange peel surface is the heating and drying conditions of the coated film.

In the present invention, the heating method is not particularly limited. Infrared radiation, hot air, ultrasonic heating, induction heating, etc. may be suitably selected in accordance with the final product.

However, in the phenomenon of convection in the coating in the coated film, heating from the substrate side is advantageous for improving the production efficiency. Even if heating from the surface of the coated film, while the convection phenomenon can be produced, the heating rate cannot be made as high as with heating from the substrate side. From this viewpoint, when using metal as the substrate, use of induction heating, electric current heating, ultrasonic heating, or another means for heating and drying from the inside surface of the coated film (substrate side) is preferable. By rapid heating from the substrate side, an orange peel surface becomes easier to form.

The heating rate of the metal substrate is not particularly limited, but in general one of 1 to 20°C/sec in range is suitable. If less than 1°C/sec, the productivity falls, so this is not preferred, while if larger than 20°C/sec, the problem of popping occurs.

Next, examples will be used to further explain the present invention. However, the present invention is not limited to the following examples needless to say.

Example 1

Steel sheets plated with zinc to 60 g/m$^2$ were nonchromate-treated (Nihon Parkerizing CTE236) as coating priming to prepare substrates.

These substrates were formed with the coated films A-1 to A-21 of the present invention shown in Table 1 and Table 2 (among these, the coated films A-11 to A-14 being reference example). These coated films were comprised of outermost (upper) coated film layers of dry average thicknesses of 10 μm and lower coated film layers of dry average thicknesses of 12 μm. The upper coated film layers were formed using coatings having the polyester-based resin FLC7000 (made by Japan Fine Coatings, beige color) as a main resin, while the lower coated film layers were formed using coatings having a polyester-based resin (made by Japan Fine Coatings, beige color, resin glass transition point of 12°C) as a main resin, by the wet-on-wet method using a curtain coater or the simultaneous multilayer coating method using a slide hopper type curtain coating system. Note that the results were the same no matter what the coating method.

The upper/lower layer coatings were mixed with various additives to change their surface tensions. The additives used were as follows:

- Polyflow S: Kusumoto Chemicals surfactant
- non-Si-based leveler (S): Kusumoto Chemicals surfactant
- BYK-141: Si-based defoam agent made by BYK
- BYK-080: Si-based defoam agent made by BYK
- BYK-065: Si-based defoam agent made by BYK
- BYK-057: non-Si-based defoam agent made by BYK
- BYK-055: non-Si-based defoam agent made by BYK
- BYK-053: non-Si-based defoam agent made by BYK
- BYK-077: non-Si-based defoam agent made by BYK
- Si-based leveler: Si-based leveler made by BYK

The upper coated film layers, unless otherwise indicated, had 0.2 mass% of Polyflow S added to them, while the lower coated film layers had the amounts of additives shown in Table 1 and Table 2 added to them.

The upper layer coatings and the lower layer coatings were made the same in resins, cross-linking agents, and pigment ingredients. Unless otherwise indicated, as the solvent, xylene/Sorbesso 150 (1/1 mass ratio) was used. In the A-13 to A-16 lower coated film layers, the surface tensions were changed, without adding any additives, by changing the types of the solvent. The heating and drying conditions of the coated film layers in a hot air oven were a maximum peak metal temperature of 230°C, and a drying time of 70 seconds.

The surface tensions of the coatings and the absolute values of the differences in surfaces tensions of the upper layer and lower layer coatings are shown together with the presence of formation of any orange peel surface at the coated films after heating and drying (formation of orange peel surface evaluated as "A", no formation of orange peel surface as "C") in Table 1 and Table 2.

Table 1

| Coated film | Upper/lower coated film layer constitution | | Amount added to lower coated film layer | Upper layer coating surface tension (δa) | Lower layer coating surface tension (δb) | \|δa-δb\| | Orange peel surface formation |
|---|---|---|---|---|---|---|---|
| | Upper coated film layer additive | Lower coated film layer additive | % | mN/m | mN/m | mN/m | |
| A-1 | Polyflow S | non-Si-based leveler (S) | 0.2 | 32.0 | 31.7 | 0.3 | A |
| A-2 | Polyflow S | BYK-141 | 0.2 | 32.0 | 31.5 | 0.5 | A |
| A-3 | Polyflow S | BYK-141 | 0.4 | 32.0 | 30.3 | 1.7 | A |
| A-4 | Polyflow S | BYK-080 | 0.2 | 32.0 | 32.1 | 0.1 | A |
| A-5 | Polyflow S | BYK-065 | 0.4 | 32.0 | 31.0 | 1.0 | A |
| A-6 | Polyflow S | BYK-057 | 0.1 | 32.0 | 32.6 | 0.6 | A |
| A-7 | Polyflow S | BYK-057 | 0.2 | 32.0 | 32.1 | 0.1 | A |
| A-8 | Polyflow S | BYK-055 | 0.4 | 32.0 | 32.5 | 0.5 | A |
| A-9 | Polyflow S | BYK-053 | 0.4 | 32.0 | 30.7 | 1.3 | A |

(continued)

| Coated film | Upper/lower coated film layer constitution | | Amount added to lower coated film layer | Upper layer coating surface tension (δa) | Lower layer coating surface tension (δb) | \|δa-δb\| | Orange peel surface formation |
|---|---|---|---|---|---|---|---|
| | Upper coated film layer additive | Lower coated film layer additive | % | mN/m | mN/m | mN/m | |
| A-10 | Polyflow S | BYK-077 | 0.2 | 32.0 | 28.4 | 3.6 | A |
| A-11 (Ref. ex.) | None | Si-based leveler | 0.05 | 33.3 | 28.1 | 5.2 | C |
| A-12 (Ref. ex.) | None | Polyflow S | 0.2 | 33.3 | 27.8 | 5.5 | C |
| A-13 (Ref. ex.) | Polyflow S | solvent change (butyl acetate) | - | 32.0 | 26.9 | 5.1 | C |
| A-14 (Ref. ex.) | Polyflow S | solvent change (N-methyl pyrrolidone) | - | 32.0 | 38.5 | 6.5 | C |

Table 2

| Coated film | Upper/lower coated film layer constitution | | Amount added to lower coated film layer | Upper layer coating surface tension (δa) | Lower layer coating surface tension (δb) | \|δa-δb\| | Orange peel surface formation |
|---|---|---|---|---|---|---|---|
| | Upper coated film layer additive | Lower coated film layer additive | % | mN/m | mN/m | mN/m | A |
| A-15 | Polyflow S | Solvent change (cyclohexanone) | - | 32.0 | 34.9 | 2.9 | A |
| A-16 | Polyflow S | solvent change (cyclohexanone/NMP) | - | 32.0 | 37.0 | 5.0 | A |
| A-17 | BYK080 (0.2%) BYK141 (0.2%) | BYK-057 | 0.2 | 31.3 | 32.1 | 0.8 | A |
| A-18 | Polyflow S (0.4%) | BYK141 | 0.2 | 31.9 | 31.5 | 0.4 | A |
| A-19 | Polyflow S (0.6%) | BYK141 | 0.2 | 31.7 | 31.5 | 0.2 | A (curtain unstable) |

(continued)

| Coated film | Upper/lower coated film layer constitution | | Amount added to lower coated film layer | Upper layer coating surface tension ($\delta a$) | Lower layer coating surface tension ($\delta b$) | $|\delta a - \delta b|$ | Orange peel surface formation |
|---|---|---|---|---|---|---|---|
| | Upper coated film layer additive | Lower coated film layer additive | % | mN/m | mN/m | mN/m | A |
| A-20 | Polyflow S (0.2%) | BYK141 | 0.5 | 32.0 | 29.8 | 2.2 | A (curtain unstable) |
| A-21 | Polyflow S (0.6%) | non-Si leveler (S) | 0.2 | 31.7 | 31,7 | 0.0 | C |

It is learned that by controlling the absolute value $|\delta a - \delta b|$ of the difference of surface tensions of the upper layer and lower layer coatings, an orange peel surface can be formed. If $|\delta a - \delta b|$ exceeds 5.0 mN/m (reference example coated films A-11 to A-14), the interface between the coated film layers stabilizes, so the orange peel surface appears only partially. Further, if there is no difference between $\delta a$ and $\delta b$ (A-21), the orange peel surface is either not formed or becomes unclear.

Example 2

Galvanized steel sheets prepared in Example 1 were formed with the coated films A-1 to A-10 explained in Example 1 to prepare test pieces and were formed with the coated films B-1 to B-5 of comparative examples shown below to prepare test pieces.

(1) Coated film B-1
A substrate was formed (baked) with a lower coated film layer of a polyester-based primer resin to 5 $\mu$m, then was coated over that with a coating comprised of a mixed resin of a polyester resin with a glass transition point of 12°C and a butylated melamine resin in an 85/15 (mass) ratio and polyester resin beads (particle size 40 $\mu$m) contained in an amount of 10% and baked using a high frequency induction heating oven at a maximum peak metal temperature of 230°C. The dry thickness of the upper layer containing the resin beads was 15 $\mu$m.
(2) Coated film B-2
Except for using a polyester resin with a glass transition point of 35°C, the same as B-1.
(3) Coated film B-3
Except for not containing polyester resin beads, the same as B-1.
(4) Coated film B-4
Except for using resin beads having an average particle size of 10 $\mu$m in the amount of addition of the resin beads of 12%, the same as B-1.
(5) Coated film B-5
Except for using the resin beads in the amount of addition of 2%, the same as B-1.

Each coated film was measured for Wca and Wc-sm using a Toyo Seiki surface measurement system "Surfcom" under conditions of a measurement length of 25 mm, a cutoff of 80 $\mu$m, and a measurement speed of 0.5 mm/sec.
The scratch resistance was evaluated by pressing a postcard by the finger against the surface of the coated film by a load of about 5 kg, rubbing it back and forth over the surface of the coated film 30 times, then visually judging the degree of scratching of the surface of the coated film. Noticeable scratching was evaluated as "C", almost invisible scratching as "A", and some scratching as "B".
The workability was evaluated by running a T-bending test at 20°C and examining the bent part of the coated film by a 10X loupe to find the T of the limit where no cracks occur. For example, when 2T bending leads to cracks being observed and 3T bending does not lead to cracks being observed, the score is 3T.
The gloss was evaluated by employing the 60 degree mirror surface reflectance (%) of the surface of coated film.
The obtained results are shown in Table 3 along with the distance between large waves at the interface of the upper and lower coated film layers in the cross-section of the coated film and the visual appearance.

Table 3

| Coated film | Wca ($\mu$m) | Wc-sm ($\mu$m) | Distance between waves ($\mu$m) | Appearance | Gloss | Scratch resistance | Workability |
|---|---|---|---|---|---|---|---|
| A-1 | 0.7 | 3550 | 650 | Smooth relief shapes | 85 | A | 0T |
| A-2 | 0.7 | 4600 | 700 | Same as above | 84 | A | 0T |
| A-3 | 0.6 | 7300 | 650 | Same as above | 85 | A | 0T |
| A-4 | 1.0 | 5200 | 750 | Same as above | 84 | A | 0T |
| A-5 | 1.2 | 4500 | 700 | Same as above | 85 | A | 0T |
| A-6 | 1.25 | 3600 | 700 | Same as above | 84 | A | 0T |
| A-7 | 1.0 | 2800 | 600 | Somewhat large relief shapes | 85 | A | 0T |
| A-8 | 1.0 | 3100 | 550 | Same as above | 84 | A | 0T |
| A-9 | 1.2 | 2800 | 550 | Same as above | 85 | A | 0T |
| A-10 | 0.35 | 2800 | 600 | Moderate relief shapes | 85 | A | 0T |
| B-1* (Comp. ex.) | 0.7 | 3000 | 700 | Smooth relief shapes | 80 | B | 0T |
| B-2* (Comp. ex.) | 0.9 | 2900 | 650 | Same as above | 81 | A | 2T |
| B-3 (Comp. ex.) | 0.7 | 15000 | 1500 or more | Smooth (Orange peel absent) | 85 | C | 0T |
| B-4* (Comp. ex.) | 0.3 | 3500 | 700 | Orange peel feeling insufficient | 85 | C | 0T |
| B-5* (Comp. ex.) | 0.6 | 7300 | 800 | Orange peel feeling small | 85 | C | 0T |
| *resin bead-containing coated film | | | | | | | |

In the coated films B-1, B-2, B-4, and B-5 of the comparative examples including beads, either the workability or scratch resistance was inferior. In the coated film B-3 with no beads, an orange peel surface could not be formed.

Example 3

Galvanized steel sheets prepared in Example 1 were coated with the coatings for the coated films A-3 and A-9 explained in Example 1 using a slide type curtain coater to form lower layers of 10 $\mu$m and upper layers of 12 $\mu$m which were then baked on using an induction heating oven and a hot air oven while changing the heating conditions. The heating conditions were such that the samples were heated from ordinary temperature (about 20°C) to the maximum peak metal temperature of 230°C during which time the following heating rate (average rate until reaching 230°C) was used:

I: 1.0°C/sec,
II: 2.5°C/sec,
III: 4.0°C/sec,
IV: 5.5°C/sec, or
V: 20°C/sec.

The surfaces of the coated films after the heat treatment were observed. When orange peel surfaces were formed well, they were evaluated as "A", while when they were not, they were evaluated as "C". The results are shown in Table 4.

Table 4

| Heating method | Heating rate I (minimum) | Heating rate II | Heating rate III | Heating rate IV | Heating rate V (maximum) |
|---|---|---|---|---|---|
| Induction heating | A | A | A | A | A |
| Hot air oven heating | A | C | C | C | C |

From the results of Table 4, it is learned that if using induction heating, the line speed can be increased and an orange peel surface can be formed with good control. In each of the examples of use of induction heating, the popping defects caused due to the solvent failing to be released well from the coated film could not be observed.

Example 4

Galvanized steel sheets prepared in Example 1 were formed with the coated films A-22 to A-24 of the present invention shown in Table 5 (of these, the coated film A-24 is a reference example). These coated films were prepared by the same conditions as in Example 1 except for the additives shown in Table 5. When preparing the coatings, the predetermined additives were added to the coatings, then a high speed disperser (Toyo Seiki paint shaker Model SCD) was used to stir the mixtures at 2000 rpm for 15 minutes.

The measurements of the surface tensions right after preparation of upper layer coatings were performed after strong stirring, then standing for 20 minutes. Further, the measurements of the surface tensions of the coatings after standing for one day and after standing for one month were performed after using a high speed disperser for strong stirring at 2000 rpm for 5 minutes and standing for 20 minutes. Note that for measurement of the surface tensions of the coatings, a BYK dynometer was used to measure the values of the static surface tensions at 20°C by the platinum ring pullup method.

Table 5

| Coated film | Upper/lower coated film layer constitutions | | Upper layer coating surface tension (δa) mN/m | | Lower layer coating surface tension (δb) mN/m | \|δa-δb\| mN/m | Orange peel surface formation | Remarks |
|---|---|---|---|---|---|---|---|---|
| | Upper coated film layer additive | Lower coated film layer additive | n-5 average value | Maximum value and minimum value difference | | | | |
| A-22 | BYK-077 (0.6%) | BYK-057 (0.2%) | 32.1 | 2.8 | 32.1 | 0.0 | A | 20 minutes after preparation of upper layer coating |

(continued)

| Coated film | Upper/lower coated film layer constitutions | | Upper layer coating surface tension (δa) mN/m | | Lower layer coating surface tension (δb) mN/m | \|δa-δb\| mN/m | Orange peel surface formation | Remarks |
|---|---|---|---|---|---|---|---|---|
| | Upper coated film layer additive | Lower coated film layer additive | n-5 average value | Maximum value and minimum value difference | | | | |
| A-23 | BYK-077 (0.6%). | BYK-057 (0.2%) | 32.1 | 2.1 | 32.1 | 0.0 | A | 1 day after preparation of upper layer coating |
| A-24 (Ref. ex.) | BYK-077 (0.6%) | BYK-057 (0.2%) | 32.1 | 1.5 | 32.1 | 0.0 | C | 1 month after preparation of upper layer coating |

When measuring a general coating for surface tension five times, usually the difference (variation) between the maximum value and minimum value is at most within 0.05 mN/m in range, but with the coating (A-22) used in the present invention, it is 2.8 mN/m. Since there is no difference in surface tension between the upper layer and lower layer, normally no orange peel surface would be formed, but the variation in surface tension of the upper layer is 2 mN/m or more, so an orange peel appearance is obtained.

If storing this coating, the variation in surface tension gradually becomes smaller. After storage for one day (A-23), the variation in surface tension is still 2.1 mN/m, so an orange peel appearance is manifested. However, after storage for one month (A-24), the variation in surface tension becomes 1.5 mN/m and the orange peel appearance can no longer be seen.

INDUSTRIAL APPLICABILITY

The precoated sheet according to the present invention can be widely used in fields where a beautiful surface appearance and design sense are requested such as building materials, home electric appliances, daily sundry goods, and automobiles. In particular, the precoated sheet of the present invention maintains its beautiful appearance of an orange peel surface without the coated film being damaged even if the substrate is shaped after coating. Therefore, there are promising applications for precoated metal sheets.

Further, orange peel surfaces are often formed by powder coating or electrostatic coating, so there is a good chance of the method of production of the present invention being utilized as alternative technology in these fields.

**Claims**

1. A precoated sheet excellent in workability and scratch resistance **characterized by** having a coated film with an outermost surface having a filtered centerline waviness curve (Wca) of 0.35 $\mu$m $\leq$Wca$\leq$1.25 $\mu$m and a mean spacing of local peaks of the filtered centerline waviness curve (Wc-sm) of 2800 $\mu$m $\leq$Wc-sm$\leq$12500 $\mu$m and by having an interface between an outermost coated film layer and its lower coated film layer of a wave structure.

2. A precoated sheet excellent in workability and scratch resistance as set forth in claim 1, **characterized in that** a waviness curve appearing when observing the interface between the outermost coated film layer and its lower coated film layer in cross-section in a thickness direction of the coated film satisfies the conditions of:

   (i) including large waves defined by having areas of A$\leq$0.8B where the distance between the coated film outermost surface and the interface waviness curve is "A" and the mean thickness of the outermost coated film layer is "B" and

(ii) having an average distance between large waves of 750 $\mu$m or less.

**3.** A precoated sheet excellent in workability and scratch resistance as set forth in claim 1 or 2, **characterized in that** the interface between the outermost coated film layer and its lower coated film layer is a continuous wave structure surface.

**4.** A precoated sheet excellent in workability and scratch resistance as set forth in any one of claims 1 to 3, **characterized in that** the outermost coated film layer and its lower coated film layer are of thermosetting resins of the same color.

**5.** A precoated sheet excellent in workability and scratch resistance as set forth in any one of claims 1 to 4, **characterized in that** the total thickness of the outermost coated film layer and its lower coated film layer is, in terms of dried coated film thickness, 5 to 50 $\mu$m.

**6.** A precoated sheet excellent in workability and scratch resistance as set forth in any one of claims 1 to 5, **characterized in that** the lower coated film layer and substrate have one or more coated films between them.

**7.** A method of production of a precoated sheet excellent in workability and scratch resistance as set forth in claim 1 **characterized by** coating a substrate with a coating forming a lower coated film layer and a coating forming an outermost coated film layer in a wet state to form a coated film and simultaneously drying these coated film layers by heating.

**8.** A method of production of a precoated sheet excellent in workability and scratch resistance as set forth in claim 7 **characterized by** coating the coating forming the lower coated film layer and the coating forming the outermost coated film layer by wet-on-wet coating or simultaneously multilayer coating.

**9.** A method of production of a precoated sheet excellent in workability and scratch resistance as set forth in claim 7 or 8 **characterized by** drying the coated film layers by heating by induction heating, electric current heating, or ultrasonic heating.

**10.** A method of production of a precoated sheet excellent in workability and scratch resistance as set forth in any one of claims 7 to 9, **characterized in that** the coating forming the outermost coated film layer, when measured for surface tension five times, has a difference between a maximum value and a minimum value of the obtained measurement values of 2 mN/m or more.

**11.** A method of production of a precoated sheet excellent in workability and scratch resistance as set forth in any one of claims 7 to 10, **characterized in that** the coating forming the outermost coated film layer includes two or more types of surfactants whose surface tensions differ.

**12.** A method of production of a precoated sheet excellent in workability and scratch resistance as set forth in any one of claims 7 to 10, **characterized in that** an absolute value of a difference between a surface tension $\delta a$ of the coating of the outermost coated film layer and the surface tension $\delta b$ of the coating of the lower coated film layer is 0.1 mN/m$\leq$|$\delta a$-$\delta b$|$\leq$5.0 mN/m in range.

**13.** A method of production of a precoated sheet excellent in workability and scratch resistance as set forth in claim 12, **characterized by** adjusting at least one of the surface tension of the coating of the outermost coated film layer and the surface tension of the coating of the lower coated film layer by adding an additive.

**14.** A method of production of a precoated sheet excellent in workability and scratch resistance as set forth in claim 13, **characterized in that** the additive is a surfactant, blending solvent, or leveler.

**15.** A method of production of a precoated sheet excellent in workability and scratch resistance as set forth in claim 11 or 13, **characterized in that** the coating contains a surfactant in an amount of 0.4 mass% or less.

**16.** A method of production of a precoated sheet excellent in workability and scratch resistance as set forth in any one of claims 7 to 15, **characterized by** using an induction heating system to heat the substrate by a heating rate of 1.0°C/sec to 20°C/sec in range so as to simultaneously dry the coated film layers by heating.

**17.** A method of production of a precoated sheet excellent in workability and scratch resistance as set forth in any one of claims 7 to 16, **characterized in that** the viscosities of the coating forming the outermost coated film layer and the coating forming its lower coated film layer are 0.2 to 1.0 Pa·s.

# Fig.1

# Fig.2

# Fig.3

# Fig.4

## INTERNATIONAL SEARCH REPORT

| International application No. |
| --- |
| PCT/JP2006/305299 |

| A. CLASSIFICATION OF SUBJECT MATTER |
| --- |
| *B05D5/00*(2006.01), *B05D1/36*(2006.01), *B32B7/04*(2006.01), *B32B27/00* (2006.01) |

According to International Patent Classification (IPC) or to both national classification and IPC

| B. FIELDS SEARCHED |
| --- |
| Minimum documentation searched (classification system followed by classification symbols)<br>B05D1/36, B05D5/00, B32B7/04, B32B27/00 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 7-275787 A (Igeta Koban Kabushiki Kaisha),<br>24 19 1995 (24.19.95),<br>Par. Nos. [0006] to [0008], [0030], [0035],<br>[0038], [0045]; Fig. 1<br>(Family: none) | 1,3-6<br>2 |
| X<br>Y | JP 7-284727 A (Igeta Koban Kabushiki Kaisha),<br>31 October, 1995 (31.10.95),<br>Claims; Par. Nos. [0011], [0012], [0055];<br>Figs. 1, 2<br>(Family: none) | 1,3-6<br>2,7-9,12-14,<br>16,17 |
| X<br>Y | JP 2001-335738 A (Sumitomo Metal Industries,<br>Ltd.),<br>04 December, 2001 (04.12.01),<br>Par. Nos. [0001], [0012], [0050] to [0054],<br>[0078]<br>(Family: none) | 1,3-6<br>2 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>13 June, 2006 (13.06.06) | Date of mailing of the international search report<br>20 June, 2006 (20.06.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/305299 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-207249 A  (Nippon Steel Corp.),<br>03 August, 1999 (03.08.99),<br>Claims; Par. Nos. [0006], [0007], [0028]<br>(Family: none) | 7,8,9,13,14,<br>16,17 |
| Y | JP 6-190336 A  (Nippon Steel Corp.),<br>12 July, 1994 (12.07.94),<br>Claims; Par. Nos. [0007], [0008]<br>(Family: none) | 7,8,12 |
| Y | JP 62-230402 A  (Kawasaki Steel Corp.),<br>09 October, 1987 (09.10.87),<br>Page 6, lower right column, lines 5 to 12;<br>drawings<br>(Family: none) | 2 |
| A | JP 2004-154610 A  (Dai Nippon Toryo Co., Ltd.),<br>03 June, 2004 (03.06.04),<br>Claims<br>(Family: none) | 8-17 |
| A | JP 4-370164 A  (Nippon Paint Co., Ltd.),<br>22 December, 1992 (22.12.92),<br>Full text<br>(Family: none) | 8-17 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4370164 A
- JP 11104557 A
- JP 5032918 A
- JP 6206047 A
- JP 2002361164 A

**Non-patent literature cited in the description**

- *Journal of the Japan Society of Colour Materials,* vol. 73 (9), 461